# EUROPÄISCHE PATENTSCHRIFT

(11) **EP 2 268 584 B1**
(45) Veröffentlichungstag und Bekanntmachung des Hinweises auf die Patenterteilung: **16.10.2013**
(21) Anmeldenummer: 09727640.6
(22) Anmeldetag: 03.04.2009
(51) Int. Cl.: C02F 3/28

(54) **REAKTOR ZUR ANAEROBEN BEHANDLUNG VON ABWASSER**
REACTOR FOR ANAEROBICALLY TREATING WASTE WATER
RÉACTEUR POUR LE TRAITEMENT ANAÉROBIE DES EAUX USÉES

(30) Priorität: 03.04.2008 DE 102008017008
(43) Veröffentlichungstag der Anmeldung: 05.01.2011
(73) Patentinhaber: Bremer pro aqua Wasser- und Abwassertechnik GmbH, 28359 Bremen (DE)
(72) Erfinder: Eggert, Wolfgang, 45289 Essen (DE); Risse, Henry, 52080 Aachen (DE); Weinhold, Gerd, 04668 Grimma (DE)
(74) Vertreter: Von Rohr
(86) Internationale Anmeldenummer: PCT/EP2009/002467
(87) Internationale Veröffentlichungsnummer: WO 2009/121617

(56) Entgegenhaltungen:
- EP-A- 0 268 225
- DE-A1- 3 810 843
- DE-A1- 4 138 599
- DE-A1- 4 208 148

## Beschreibung

Die Erfindung betrifft einen Reaktor zur anaeroben Behandlung von Abwasser oder dergleichen durch anaerobe biologische Umsetzung organischer Bestandteile und / oder Verunreinigungen mittels granulierter und / oder flockiger und / oder auf fluidisierbaren Trägermaterialien fixierter Biomasse, wobei der Reaktor in einem unteren Bereich eine Abwasserzuleitung aufweist.

Weiter betrifft die Erfindung ein Verfahren zur anaeroben Behandlung von Abwasser oder dergleichen durch anaerobe biologische Umsetzung organischer Bestandteile und / oder Verunreinigungen mittels granulierter und / oder flockiger und / oder auf fluidisierbaren Trägermaterialien fixierter Biomasse in einem Reaktor, der zumindest in einem unteren Bereich einen Biomassesumpf aufweist, wobei dem Reaktor im unteren Bereich das Abwasser zugeführt wird.

Derartige Reaktoren und Verfahren zur anaeroben Behandlung von Abwasser sind bekannt. In derartigen Reaktoren zur anaeroben Behandlung von Abwasser werden die organischen Verbindungen des Abwassers überwiegend zu CO₂, H₂O und Biogas abgebaut. Dieser Vorgang läuft in einem Dreiphasensystem ab, bestehend aus der Flüssigkeit welche das zu behandelnde Abwasser darstellt, dem Feststoff der im Schlammbett vorliegenden granulierten Biomasse, sowie der Gasphase, die vorwiegend aus Methan, CO₂ und Spurengasen besteht.

Die anaerobe Reinigung organisch belasteter Abwässer wird vorteilhaft in Schlammbettreaktoren betrieben, die nach dem bekannten UASB-Prinzip arbeiten. Reaktoren die nach diesem Prinzip arbeiten sind z.B. aus der EP 0 808 805 A1 oder der EP 1 408 008 D1 bekannt.

Das UASB-Verfahren ist ein kontinuierliches Verfahren, bei dem der Reaktor ständig von Abwasser und Schlamm durchflossen wird. Die Abwasserzuführung erfolgt im unteren Bereich des Reaktors, im Bereich des Schlammbettes.

Durch die im Schlammbett erfolgende Biogaserzeugung kommt es zu einer Gasblasenbildung, die teilweise, insbesondere in kleineren Ausmaßen, an die Biomasse gebunden sind.

Die aufsteigenden, größeren freien sowie die an die Biomasse gebundenen Gasblasen fluidisieren gemeinsam mit der aufwärts gerichteten Flüssigkeitsströmung auf Grund des Zuflusses zum Reaktor das Schlammbett. Die entgaste Biomasse sinkt auf Grund ihrer höheren Dichte gegenüber der Flüssigkeitsphase entgegen der Flüssigkeitsströmung abwärts. Der vertikal ausgerichtete Reaktorraum kann somit aufgeteilt werden in ein Schlammbett im unteren Bereich, welches die anaerobe Reaktionszone bildet, sowie einen oberen Bereich, in dem eine Abtrennung der Gasphase in der Flüssigphase erfolgt. Bei der Abtrennung der Gasphase aus der Flüssigphase muss die Gaskantenbelastung beachtet werden. Es muss ein Gaspolster gehalten werden, um eine sichere Abtrennung zu erreichen.

Nachteilig bei den bekannten Vorrichtungen ist, dass die dafür notwendigen Kammern, Überfall-, Tauch- und Leiteinrichtungen nicht nur kompliziert im Aufbau sondern auch sehr verstopfungsanfällig sind und damit einen begrenzten Arbeitsbereich besitzen.

Ein weiterer Nachteil der bekannten Vorrichtungen und Verfahren zur anaeroben Behandlung von Abwasser ist, dass auf Grund der großvolumigen Ausgestaltung des Reaktors die Durchmischung von zugefügtem Abwasser mit der Biomasse in dem Schlammbett nur unbefriedigend ist.

Weiterhin nachteilig bei den bekannten Reaktoren ist, dass hohe Pumpleistungen aufgebracht werden müssen, um die Hydraulik zur kompletten Fluidisierung im Reaktor und damit die anaerobe Behandlung von Abwasser optimal aufrecht zu erhalten.
Die Druckschrift DE 41 38 599 A1 betrifft einen Reaktor für den biochemischen Umbau von biologisch abbaubaren Substanzen, die als wässrige Lösung oder Suspension, als wässriges Gemisch oder Konzentrat vorliegen und mit Feststoffen zur Fixierung von Mikroorganismen teilgefüllt sind. In einem stehenden zylindrischen Gefäß ist hierzu ein Standrohr angeordnet, dessen unteres Ende im Abstand vom Gefäßboden endet. Am unteren Ende des Gefäßes ist tangential ein erstes Zulaufrohr zum Eintragen eines Gas/Wasser-Gemisches eingeführt. Ein zweites Zulaufrohr zum Eintragen eines Gas/Wasser-Gemisches mündet unterhalb des Standrohres tangential in das Gefäß. Die über die Zulaufrohre eingetragenen Gas/Wasser-Gemischmengen sind so einstellbar, dass die eingetragenen Feststoffe in der Schwebe gehalten werden und im Standrohr eine stark verwirbelte Aufwärtsströmung entsteht.
Weiterhin betrifft die Druckschrift DE 42 08 148 A1 ein Verfahren und eine Vorrichtung für die anaerobe Schlammzersetzung. Der hierzu eingesetzte Behälter weist ein Oberteil und ein Unterteil sowie ein im Wesentlichen vertikales Saugrohr auf, dessen oberes Ende mit Absatz unterhalb des Behälteroberteils und dessen unteres Ende mit Absatz oberhalb des Behälterbodens angeordnet ist. Im Betriebszustand wird ein unter Druck gesetzter Strom flüssigen Schlamms zu einer Einlassseite einer nach oben gerichteten Strahldüse eingeleitet, welche betriebsfähig angeordnet ist und in Verbindung mit einem im Wesentlichen vertikalen Venturirohr steht, welches einen unteren Einlass aufweist und einen Teil des oberen Endes des Saugrohres bildet, wobei ein Unterdruck einen Sog an dem Venturirohreinlass erzeugt und eine Pumpwirkung hervorruft.
Darüber hinaus betrifft die Druckschrift DE 38 10 843 A1 einen Antrieb für volldurchmischte Bioreaktoren zum Einstellen der Zirkulation eines in den Reaktorbehälter eingebrachten Substrats, wobei der Antrieb ein Pulsantrieb mit einer am Reaktorgehäuse vorgesehenen Pulsdüse ist, deren Einström- und Ausströmquerschnitt bzw. Einström- und Ausströmgeschwindigkeit im Saug- und Druckhub der Pulszyklen so eingestellt sind, dass sich die jeweils erforderliche Substratumwälzung kreislaufartig einstellt.
Schließlich betrifft die Druckschrift EP 0 268 225 A3 ein Verfahren und eine Einrichtung zum biologischen Reinigen von Flüssigkeiten in einem Reaktionsraum, bei dem die biologisch wirksame Biomasse mit einem Trägermaterial verbunden ist, weiches nach Art einer zirkulierenden Wirbelschicht durch den Reaktor geführt, von der Flüssigkeit getrennt und wieder der Reaktionszone zugeführt wird.

Die Aufgabe der Erfindung ist es, die vorstehend bezeichneten Nachteile des Standes der Technik zu überwinden. Die bekannten Reaktoren und Verfahren zur anaeroben Behandlung von Abwasser sollen derart weitergebildet werden, dass eine verbesserte Durchmischung des zugeführten Abwassers mit der Biomasse erzielt wird, um damit eine effizientere Ausnutzung des Reaktorvolumens zu realisieren. Des Weiteren soll mit der erfindungsgemäßen Vorrichtung und dem erfindungsgemäßen Verfahren eine Gasabtrennung insbesondere aus dem Innenbereich des Reaktors unabhängig von einer Gaskantenbelastung realisierbar sein.

Diese Aufgabe wird erfindungsgemäß gelöst durch einen Reaktor zur anaeroben Behandlung von Abwasser gemäß Anspruch 1 und ein Verfahren zur anaeroben Behandlung von Abwasser gemäß Anspruch 9. Vorteilhafte Weiterbildungen des erfindungsgemäßen Reaktors und des erfindungsgemäßen Verfahrens sind in den jeweiligen abhängigen Ansprüchen angegeben.

Besonders vorteilhaft ist, dass bei dem Reaktor zur anaeroben Behandlung von Abwasser oder dergleichen durch anaerobe biologische Umsetzung organischer Bestandteile und / oder Verunreinigungen mittels granulierter und / oder flockiger und / oder auf fluidisierbaren Trägermaterialien fixierter Biomasse, wobei der Reaktor in einem unteren Bereich eine Abwasserzuleitung aufweist, dass der Reaktor im unteren Bereich zumindest einen Einlaufzyklon aufweist, in den das Abwasser tangential einleitbar ist,
wobei oberhalb des Einlaufzyklons ein Zwischenabscheider angeordnet ist, der in eine Steigleitung zur Leitung eines Dreiphasengemisches in einen Kopfbereich des Reaktors mündet, und wobei eine Fallleitung zur Rückführung eines Flüssig-Feststoffgemisches von dem Kopfbereich des Reaktors zu einem mittleren Bereich oder dem unteren Bereich des Reaktors die Steigleitung koaxial umgibt.

Bei dem erfindungsgemäßen Verfahren zur anaeroben Behandlung von Abwasser oder dergleichen durch anaerobe biologische Umsetzung organischer Bestandteile und / oder Verunreinigungen mittels granulierter und / oder flockiger und / oder auf fluidisierbaren Trägermaterialien fixierter Biomasse in einem Reaktor, der zumindest in einem unteren Bereich einen Biomassesumpf aufweist, wobei dem Reaktor im unteren Bereich das Abwasser zugeführt wird, ist vorgesehen, dass das Abwasser in einen Einlaufzyklon in dem Reaktor tangential eingeleitet wird, so dass sich in dem Einlaufzyklon durch die Biogasbildung eine nach oben gerichtete Wirbelströmung eines Dreiphasengemisches aus Gas, Wasser und Biomasse ausbildet,
wobei oberhalb des Einlaufzyklons ein Teil des aufsteigenden Dreiphasengemisches über einen Zwischenabscheider und eine daran angeschlossene Steigleitung zur Entgasung in einen Kopfbereich des Reaktors geleitet wird und wobei vom Kopfbereich des Reaktors entgastes Zweiphasengemisch aus Wasser und Biomasse über eine die Steigleitung koaxial umgebende Fallleitung zu einem mittleren oder dem unteren Bereich des Reaktors geleitet wird.

Durch die Anordnung eines Einlaufzyklons in der Untersäule des Reaktors, in den das Abwasser tangential eingeleitet wird, wird eine optimale Durchmischung der Fest- und Flüssigphase, sowie des Abwasserzulaufstromes in der Untersäule des Anaerobreaktors realisiert, wodurch eine besonders effektive Arbeitsweise des Anaerobreaktors ermöglicht wird. Dabei werden strömungstechnische Totzonen aufgrund von fehlenden oder zu geringen Strömungen und Turbolenzen im Bereich des Schlammbettes des Reaktors vermieden. Die Bildung von Totzonen wäre sehr nachteilig, da sich dort Schlammpellets und andere Feststoffe absetzen und so dem aktiven Umsetzungsprozess nicht mehr zur Verfügung stünden.

Besonders vorteilhaft bei dem erfindungsgemäßen Reaktor und dem erfindungsgemäßen Verfahren ist es, dass aufgrund der Einleitung des Abwassers tangential in einen Einlaufzyklon in einem unteren Bereich des Reaktors strömungstechnische Totzonen zuverlässig vermieden werden, da sich aufgrund der tangentialen Einleitung in den Einlaufzyklon sowie der im unteren Bereich des Reaktors, d.h. im Bereich des Schlammbettes beginnenden anaeroben Umsetzung und Biogasbildung, eine nach oben gerichtete Wirbelströmung automatisch ausbildet. Hierzu ist der Einlaufzyklon in dem Reaktorraum, vorzugsweise senkrecht angeordnet, so dass sich innerhalb des Einlaufzyklons eine nach oben gerichtete Wirbelströmung ausbildet und selbstständig aufrecht erhält, ohne das hierzu eine weitere Pumpleistung erforderlich ist.

Hierdurch wird eine Intensivierung der Gasproduktion erzielt, die wiederum auf Grund der sich durch den Dichteunterschied des Dreiphasengemisches ausbildenden Strömungsverhältnisse zu einer verstärkten Durchmischung im Reaktor führt, welche letztlich eine effizientere Ausnutzung des Reaktorvolumens fördert.

Vorzugsweise weist der Reaktor zumindest in seinem unteren Bereich einen Biomassesumpf auf.

Erfindungsgemäß ist oberhalb des Einlaufzyklons ein Zwischenabscheider angeordnet, der in eine Steigleitung mündet. Dabei kann die Steigleitung einen nach unten geöffneten Einlauftrichter aufweisen, insbesondere kann der Durchmesser des nach unten geöffneten Einlauftrichters größer sein als der Durchmesser des darunter angeordneten Einlaufzyklons. Der Einlaufzyklon kann auch unmittelbar in die Steigleitung münden, dergestalt, dass der Einlaufzyklon und die Steigleitung miteinander verbunden sind.

Vorzugsweise ist die Austrittshöhe der Steigleitung im Reaktorkopf variabel. Hierzu kann eine höhenverstellbare Auslaufmuffe, die die Steigleitung im Bereich des oberen Endes umgibt oder in der Steigleitung sitzt, angeordnet sein. Es hat sich gezeigt, dass die Höhe des oberen Austritts der Steigleitung große Auswirkungen auf die sich im Reaktor ausbildende Umlaufströmung hat, d.h. dass über die Höhe des oberen Endes der Steigleitung im Reaktorkopf die Intensität der Umlaufströmung einstellbar ist.

Befindet sich die Austrittshöhe der Steigleitung weit oberhalb des Flüssigkeitsspiegels im Reaktorkopf, so stellt sich nur ein geringer Umlauf ein. Ist jedoch die Austrittshöhe der Steigleitung nah oberhalb, d.h. nur wenige Zentimeter oberhalb des Flüssigkeitsspiegels im Reaktor, so stellt sich eine erhebliche Umlaufströmung im Reaktor ein. Die Ausbildung dieser Umlaufströmung wird weiter unten noch näher erläutert.

An der freien Wasseroberfläche in der Obersäule des Reaktors trennt sich die in der Obersäule gebildete Gasphase von der Fest-Flüssigphase.

Im Kopfbereich des Reaktors ist vorzugsweise ein Gassammelraum angeordnet, in dem sich das gebildete Biogas aus Untersäule und Obersäule ansammelt und über eine Anschlussleitung zur weiteren Verwendung entnehmbar ist. Vorzugsweise ist im oberen Bereich des Reaktors ein Ablaufsystem angeordnet, über dass das in dem Reaktor aufbereitete Wasser aus dem Reaktor ableitbar ist, d.h. dass mittels des Ablaufsystems das behandelte Wasser des Reaktors aus dem Reaktor ableitbar ist. Die entgaste Biomasse sedimentiert und sinkt abwärts durch die Obersäule in die Untersäule des Reaktors, wo sie von einer Abwärtsströmung auf Grund der Saugwirkung außerhalb des Einlaufzyklons erfasst, mitgeführt und innerhalb des Einlaufzyklons erneut eingemischt werden kann.

Im oberen Bereich des Reaktors kann ein Rücklauftrichter angeordnet sein, der nach oben in einen Gassammelraum im Kopfbereich des Reaktors mündet und der nach unten in die Fallleitung mündet, insbesondere kann die Fallleitung vom Kopfbereich des Reaktors bis zu dem mittleren oder dem unteren Bereich des Reaktors verlaufend angeordnet sein.

Eine erfindungsgemäße Gestaltung der Leiteinächtungen der Mehrphasengemische durch die Obersäule des Reaktors liegt vor, wenn die Fallleitung zur Rückführung des Fest-Flüssigstoffgemisches vom Kopfbereich des Reaktors zu einem mittleren oder unteren Bereich des Reaktors derart angeordnet ist, dass die Fallleitung die Steigleitung des Dreiphasengemisches aus der Obersäule in den Kopfbereich des Reaktors koaxial umgibt. Durch eine koaxiale Anordnung von Steigleitung und Fallleitung ist eine besonders vorteilhaft zu fertigende und zu montierende Leitungsanordnung realisierbar.

In einer bevorzugten Ausführungsform kann die Fallleitung zur Rückführung eines Flüssig-Feststoff-Gemisches zu dem unteren oder mittleren Bereich des Reaktors und die Steigleitung zur Leitung des Dreiphasengemisches in dem Kopfbereich des Reaktors angeordnet sein, wobei insbesondere der freie Strömungsquerschnitt der Fallleitung mindestens dem freien Strömungsquerschnitt der Steigleitung entsprechen kann.

Vorzugsweise weist der Reaktor zumindest einen Laminator zur Gleichrichtung und / oder Beruhigung der Strömung auf, insbesondere kann ein derartiger Laminator zur Gleichrichtung und / oder Beruhigung der Strömung im oberen Bereich des Reaktors angeordnet sein. In einer bevorzugten Ausführungsform weist der Reaktor zumindest einen durch koaxial angeordnete Rohrabschnitte gebildeten Laminator zur Gleichrichtung und / oder Beruhigung der Strömung auf.

Vorzugsweise ist der Außendurchmesser des Einlaufzyklons kleiner als der Innendurchmesser des Reaktorraumes, so dass sich eine Umlaufströmung um den Einlaufzyklon ausbilden kann. Vorzugsweise ist der Einlaufzyklon in einem Abstand vom Reaktorboden angeordnet, insbesondere in einem Abstand, der größer ist als der Durchmesser des Einlaufzyklons. Der Einlaufzyklon kann einen sich nach unten erweiternden trichterförmigen Einlaufbereich aufweisen, insbesondere kann sich der Einlaufbereich bis auf einen um den Faktor bis zu 1,6 gegenüber dem Durchmesser des Einlaufzyklons vergrößerten Durchmesser erweitern. Bevorzugt weist der Einlaufzyklon oberhalb des Einlaufbereiches eine Mischzone auf.

Der Einlaufzyklon selbst kann durch ein zylindrisches Rohr gebildet sein.

Dadurch, dass das Abwasser, welches in dem Reaktor aufzubereiten ist, tangential in den Einlaufzyklon eingebracht wird, bildet sich innerhalb des zylindrischen Einlaufzyklons, d.h. innerhalb des rohrförmigen Bauteiles welches den Einlaufzyklon bildet, eine Wirbelströmung aus. Hierdurch ergibt sich eine optimale Durchmischung des eingebrachten Abwassers mit dem Biomasseschlamm und es resultiert unmittelbar die anaerobe Umsetzung und die anaerobe Reinigung des Abwassers, wodurch die organischen Bestandteile des Abwassers in Biogas umgesetzt werden, d.h. dass insbesondere Methan gebildet wird.

Durch die Gasbildung und die optimale Durchmischung innerhalb des Einlaufzyklons bildet sich in dem Einlaufzyklon eine aufsteigende Wirbelströmung aus.

Durch die geometrische Gestaltung des Einlaufzyklons und dessen Anordnung innerhalb des unteren Reaktorraumes, d.h. bevorzugt mit einem Abstand vom Boden des Reaktorraumes und des weiteren dergestalt, dass der Außendurchmesser des Einlaufzyklons kleiner ist als der Innendurchmesser des Reaktorraumes, bildet sich ein Rezirkulationsstrom in dem Reaktor aus. Hierdurch wird die Reinigungsleistung bezüglich des zu reinigenden Abwassers und der Neutralisationsmittelverbrauch positiv beeinflusst und des Weiteren werden die inneren hydraulischen Verhältnisse des Reaktors optimal eingestellt, um die Schlammpellets in einem aufgelockerten Schwebebett zu halten.

Das in der Untersäule anfallende Biogas, welches ca. 60 - 80 % der Gesamtmenge des gebildeten Biogases ausmachen kann, durchströmt den verbleibenden Reaktorbereich von unten nach oben. Bei dem erfindungsgemäßen Reaktor wird das in der Untersäule des Reaktors entstehende Biogas zur gezielten Umwälzung und damit zur Einsparung von Pumpleistung genutzt und gleichzeitig wird die Obersäule zur sauberen Trennung der Fest-Flüssig-Phase sowie des Weiteren zur Abtrennung der Gasphase entlastet. Durch die gezielte Nutzung der Eigendynamik durch das entstehende und in der Flüssig-Fest-Phase aufsteigende Biogas wird eine Aufwärtsströmung erzeugt, die gezielt durch die vorgesehenen Strömungseinrichtungen und Leiteinrichtungen innerhalb des Reaktors geleitet und umgelenkt wird.

Insbesondere durch die Leiteinrichtungen wird eine gezielte Walzenströmung realisiert, die zu einer optimalen Durchmischung der Fest- und Flüssigphase in der Untersäule des Anaerobreaktors führt, so dass Totzonen vermieden werden.

Aufgrund der Aufwärtsströmung und der Ableitung des in der Mittelsäule des Reaktors gebildeten Biogases gemeinsam mit der umgebenden Flüssig-FestPhase in den Reaktorkopf, erfolgt dort eine saubere Ausgasung und Abtrennung des Biogases, wobei eine Gaskantenbelastung keine Bedeutung mehr besitzt und damit als Störquelle ausgeschlossen werden kann.

Die Flüssig-Feststoff-Phase wird gezielt der Untersäule des Reaktors zurück zugeführt, wobei durch einen Zwischenabzug der drei Phasen Gas, Flüssig- und Feststoff, die Obersäule des Reaktors hydraulisch und pneumatisch um 60-80% entlastet wird, was zu einer sicheren und problemlosen Trennung der Flüssig- und Festphase im Reaktorkopf führt.

Durch die gezielte Einrichtung und Trennung von turbulenten und beruhigten Zonen kann je nach verfahrenstechnischen Erfordernissen das Schlammvolumen im Reaktor erhöht und gleichzeitig die Dreiphasentrennung und damit die Abbauleistung bei reduzierter Pumpenergie verbessert werden.

Vorzugsweise ist der erfindungsgemäße Reaktor funktionell in zwei Bereiche eingeteilt, mit einer Untersäule mit dem Einlaufsystem als Einlaufzyklon und einem Zwischenabscheidersystem, sowie des Weiteren mit einer Obersäule vorzugsweise mit einem Laminator als Beruhigungszone, einer Ablaufeinrichtung zur Flüssigkeits-, Feststoffstrennung und einer Entgasungseinrichtung.

In der Untersäule ist zumindest ein Einlaufzyklon angeordnet in den der Rohwasserzulauf tangential eingebracht ist, d.h. dass das zu reinigende Abwasser tangential in den Einlaufzyklon eingebracht wird, so dass sich eine Wirbelströmung innerhalb des Einlaufzyklons ausbildet.

Durch die Verwirbelungen innerhalb des Einlaufzyklons, der durch einen zylindrischen, rohrförmigen Aufbau gekennzeichnet ist, und sofortigen Kontakt mit den im Reaktor befindlichen aktiven Schlammpellets wird Biogas gebildet, was aufgrund des Mammutpumpeneffektes zu einer verstärkten Aufwärtsströmung des Dreiphasengemisches führt. Die Ausbildung und ggf. Erhöhung und Verstärkung der Aufwärtsströmung ist direkt von der Gasproduktion abhängig und zu der Gasproduktion äquivalent.

Erfindungsgemäß wird in definiertem Abstand über dem Einlaufzyklon ein Teilstrom des aufströmenden Dreiphasengemisches abgeschieden und separat in der Steigleitung in den Reaktorkopfbereich gefördert. Hierzu ist eine entsprechende Steigleitung angeordnet. Insbesondere kann die Steigleitung an Ihrer Unterseite einen nach unten sich erweiternden trichterförmigen Einlaufbereich aufweisen. Durch diese Steigleitung wird von einem mittleren Bereich des Reaktors das aufströmende Dreiphasengemisch direkt in den Reaktorkopfbereich geleitet, wobei die Höhe der Austrittsöffnung, d.h. das obere Ende der Steigleitung, bevorzugt gleich oder höher als der Flüssigkeitsstand im Reaktor ist. Im Reaktorkopf trennt sich das Biogas ungehindert aus dem Dreiphasengemisch heraus und wird über einen im Reaktorkopf befindlichen Gassammelraum abgeleitet.

Das Flüssigkeits-, Schlammgemisch wird vorzugsweise in einem die Steigleitung umschließenden Trichter gesammelt und über eine sich an den Trichter anschließende Fallleitung im freien Ablauf direkt wieder in die Untersäule des Anaerobreaktors zurückgeleitet. Erfindungsgemäß umgibt die Fallleitung die Steigleitung koaxial.

Aufgrund dieser separaten Strömungsführung wird die Obersäule von den beschriebenen Medienströmen durch die Steigleitung und die Fallleitung nicht beeinflusst.

Die zuvor beschriebene Aufwärtsströmung im Einlaufzyklon bewirkt gleichzeitig ein Ansaugen des Dreiphasengemisches aus dem Sumpfbereich der Untersäule, was wiederum eine Rezirkulationsströmung um den Einlaufzyklon herum, d.h. eine Abwärtsströmung außerhalb, um den Einlaufzyklon herum, bewirkt.

Das aus der Fallleitung austretende zurückgeleitete Zweiphasengemisch aus flüssiger und fester Phase wird vorzugsweise in diese Abwärtsströmung abgegeben und so auf kurzem und schnellem Wege in den Einlaufzyklon angesaugt.

Mit dem zulaufendem Rohwasser vermischt, wird sofort wieder Biogas erzeugt.

Die Aufwärtsströmung in der Obersäule wird dementsprechend ausschließlich durch den Zulaufstrom an Rohwasser bestimmt.

Es bildet sich somit durch den Zulaufstrom von Rohwasser, sowie durch die Biogasbildung innerhalb des Einlaufzyklons unter Ausnutzung des Auftriebs der gebildeten Gasblasen sowie den Dichteunterschied zwischen der von oben nach unten zurückgeführten Zweiphasenmischung aus Flüssigkeit und Feststoff, gegenüber dem gasblasenbeladenden Dreiphasengemisch ein Naturumlauf innerhalb des Reaktors aus, so dass eine optimale Durchmischung und ein optimaler Stofftransport gewährleistet werden kann, ohne das es erforderlich ist, eine zusätzliche Pumpleistung aufzubringen.

Die äquivalente Menge des Zulaufstromes aus dem Bereich, in dem die Fallleitung endet, gelangt mit reduziertem Pelletschlammanteil in die beruhigte Obersäule, die zusätzlich mit einem Laminatorsystem ausgerüstet sein kann. In einer besonders bevorzugten Ausführungsform weist ein solches Laminatorsystem einen geometrisch sehr einfachen Aufbau durch mehrere koaxiale angeordnete Rohrabschnitte auf. Insbesondere kann dieses Laminatorsystem derart ausgebildet sein, dass es die Steigleitung und / oder die Fallleitung im oberen Bereich des Reaktors koaxial umgibt.

Die mitgerissenen oder mit Biogas beladenen Schlammpellets sedimentieren spätestens im Bereich der Tauchwand und Ablaufrinne im Reaktorkopfbereich und werden in die Walzertströmung der Untersäule zurückgeleitet. Durch die reduzierte Schlammkonzentration und die reduzierten gelösten Substratkonzentration in Abwasser erfolgt in der Obersäule gleichzeitig eine Nachreinigung.

Durch die bevorzugte Anordnung des Laminatorsystems im oberen Bereich des Reaktors zur Gleichrichtung und / oder Beruhigung der aufsteigenden Strömung im oberen Bereich des Reaktors wird somit die Trennung der Phasen des Dreiphasengemisches durch die Gleichrichtung und / oder Beruhigung der Strömung unterstützt, da die Phasen im Bereich laminarer Strömung einfacher voneinander zu trennen sind in Gas, Flüssigkeit und Feststoff, als im Bereich turbulenter Strömungen die durch einen hohen Impulsaustausch gekennzeichnet sind.

Im Reaktorkopf oberhalb eines ggf. angeordneten Strömungsgleichrichters erfolgt dann die endgültige Abtrennung des Klarwassers von den Schlammpellets.

Vorzugsweise weist der Reaktor somit einen Grundaufbau aus einer Mehrzahl von rotationssymetrisch ausgebildeten Bauteilen, die insbesondere koaxial zueinander angeordnet sein können, auf. So umgibt die Fallleitung die Steigleitung koaxial im oberen Bereich des Reaktors und des Weiteren kann im oberen Bereich des Reaktors auch ein durch koaxial angeordnete Rohrleitungsabschnitte gebildeter Laminator angeordnet sein, so dass sich insgesamt ein einfach zu fertigender und zu montierender Grundaufbau eines derartigen Reaktors zur anaeroben Behandlung von Abwasser ergibt.

In einer anderen Ausführungsform des erfindungsgemäßen Reaktors kann der Reaktor mehrere parallel angeordnete Einlaufzyklone aufweisen, d.h. dass mehrere Einlaufzyklone strömungstechnisch parallel geschaltet sein können.

Vorzugsweise beträt die Querschnittsfläche des Einlaufzyklons oder der Einlaufzyklone 30 % bis 50 % der Querschnittsfläche des Reaktors, insbesondere kann die Querschnittsfläche des Einlaufzyklons oder der Einlaufzyklone 40 % der Querschnittsfläche des Reaktors entsprechen. Durch eine derartige geometrische Gestaltung können optimale Strömungsverhältnisse und ein optimaler Rezirkulationsstrom um den Einlaufzyklon oder die Einlaufzyklone ausgebildet werden.

Wie bereits zuvor erläutert können der Reaktor der / die Einlaufzyklone und / oder ein Laminator und / oder Ausgasvorrichtungen und / oder Steigleitungen und / oder Fallleitungen und / oder Einlauftrichter oder dergleichen einen rotationssymmetrischen Aufbau aufweisen, insbesondere können Einbauten innerhalb des Reaktors axial und / oder koaxial zueinander angeordnet sein, wodurch sich eine einfache Fertigung und Montage einzelner Baueinheiten sowie des gesamten Reaktors realisieren lässt.

Bei der Anwendung des erfindungsgemäßen Verfahrens zur anaeroben Behandlung von Abwasser wird oberhalb des Einlaufzyklons ein Teil des aufsteigenden Dreiphasengemisches über einen Zwischenabscheider und eine daran angeschlossene Steigleitung zur Entgasung in den Kopfbereich des Reaktors geleitet. Ebenfalls wird vom Kopfbereich des Reaktors entgastes Zweiphasengemisch aus Wasser und Biomasse über eine die Steigleitung koaxial umgebende Fallleitung in einen mittleren oder unteren Bereich des Reaktors zurück geleitet.

Vorzugsweise wird eine Umlaufströmung um den Einlaufzyklon oder um die Einlaufzyklone durch eine innerhalb des Einlaufzyklons / der Einlaufzyklone aufsteigende Wirbelströmung und eine außerhalb des Einlaufzyklons / der Einlaufzyklone absinkende Rückströmung im unteren Bereich des Reaktors ausgebildet. Vorzugsweise wird das Abwasser mit der Biomasse in einer Mischzone des Einlaufzyklons / der Einlaufzyklone durchmischt.

Wie bereits zuvor erläutert können durch die Ausbildung einer Mischzone, in der eine Durchmischung des Abwassers mit der Biomasse innerhalb des Einlaufzyklons erfolgt, sowie insbesondere durch die Ausbildung einer Umlaufströmung respektive einer Zirkulationsströmung, optimale Strömungsverhältnisse zur Vermeidung von Totwassergebieten ausgebildet werden, so dass sich eine optimale Ausnutzung der Biomasse zur anaeroben Umsetzung organischer Verunreinigungen des Abwassers und zur Biogasbildung einstellt.

Bevorzugt erfolgt bei dem erfindungsgemäßen Verfahren eine Strömungsgleichrichtung oder Strömungsberuhigung der aufsteigenden Strömung mittels eines Laminators oder Gleichrichters, insbesondere kann eine derartige Beruhigung der aufsteigenden Strömung oberhalb des Einlaufzyklons, respektive oberhalb der Einlaufzyklone erfolgen. Ein derartiger Laminator, der bei dem Reaktor vorgesehen sein kann, kann wie zuvor erläutert durch mehrere zueinander koaxial angeordnete Rohrabschnitte gebildet sein. Ein solches Laminatorsystem kann jedoch auch gebildet sein durch einfache Bleche, von denen mehrere zueinander parallel angeordnet sind oder durch eine Wabenstruktur oder dergleichen.

Das Verfahren kann insbesondere derart ausgestaltet sein, dass in einer Mischzone des Einlaufzyklons eine Durchmischung der drei Phasen aus dem im Reaktor befindlichen sowie zugeleiteten Abwasser, aus der Biomasse sowie des permanent gebildeten Biogases erfolgt, wobei durch den Dichteunterschied des Dreiphasengemisches in der Mischzone zu dem Gemisch in dem umgebenden Reaktorraum eine Verstärkung der Aufwärtsströmung im Bereich der Mischzone bewirkt wird.

Bevorzugt wird durch die aufsteigende Wirbelströmung innerhalb des Einlaufzyklons mit einem strömungstechnisch nachfolgend angeordneten Zwischenabscheider und der Überleitung in eine Steigleitung, die bis zum Reaktorkopf reicht, zur Entgasung des Dreiphasengemisches und der Rückleitung des entgasten Zweiphasengemisches vom Reaktorkopf zurück in den mittleren oder unteren Bereich des Reaktors, sowie die außerhalb des Einlaufzyklons oder der Einlaufzyklone absinkende Strömung im Bereich des Biomassesumpfes ein durch die Biogasbildung und dendamit verbundenen Auftrieb der Gasphase Naturumlauf im Reaktor ausgebildet, durch den insbesondere die Durchmischung und die Biogasbildung und die anaerobe Reinigung des Abwassers aufrecht erhalten und / oder verstärkt wird. Durch die vorteilhafte Ausnutzung des Auftriebs der Gasphase sowie des Dichteunterschiedes zwischen dem entgasten Zweiphasengemisch sowie dem Dreiphasengemisch ist es somit in vorteilhafter Weise möglich, das erfindungsgemäße Verfahren derart auszugestalten, dass sich ein Naturumlauf ausbildet, so dass durch diese Rezirkulation der Stoffe und Stoffgemische die Biogasbildung und somit die Reinigung des Abwassers aufrecht erhalten oder verstärkt wird, ohne dass externe Pumpleistung zugeführt werden muss, wodurch sich eine optimale Ausnutzung der Reaktorbaugröße ergibt. Vorzugsweise wird im Bereich des Reaktorkopfes gereinigtes Wasser und /oder Biogas entnommen.

Die Wirkungsweise des erfindungsgemäßen Reaktors in einer bevorzugten Ausführungsform wird nachfolgend erläutert. Dem Reaktor zur anaeroben Behandlung von Abwasser wird über eine Zuleitung in der Zulaufzone des Zyklons das zufließende Abwasser tangential zugeleitet, wodurch es zu einer intensiven Durchmischung mit der in der Untersäule des Reaktors in erhöhter Konzentration befindlichen Biomasse verbunden mit einer erhöhten Biogasbildung in diesem Bereich kommt. Auf Grund der Dichteverringerung durch die Biogasbildung bildet sich in dem Einlaufzyklon eine nach oben gerichtete Wirbelströmung aus.

Diese mit fortschreitender Biogasproduktion sich verstärkende, aufwärts gerichtete Strömung des Dreiphasengemisches wird in sich direkt anschließende Leiteinrichtungen oder über einen der Leiteinrichtung vorgeschalteten Zwischenabscheider durch die Obersäule bis in den Kopfbereich des Reaktors geleitet, wo sich die Gasphase selbständig und vollständig von der Fest- und Flüssigphase abtrennt und kontinuierlich abgeführt wird.

Das entgaste Zweiphasengemisch wird in einer Sammelvorrichtung im Reaktorkopf gesammelt und fließt im freien Ablauf über eine zweite Leiteinrichtung durch die Obersäule in die Untersäule des Reaktors zurück, wo es durch die Saugwirkung am unteren Ende des Einlaufzyklons erneut angesaugt und eingemischt wird.

Die Obersäule des Reaktors bleibt von der Strömungsführung in der Untersäule unbeeinflusst und wird gleichzeitig auf Grund des separat geleiteten Abzuges der Gasphase aus der Untersäule strömungstechnisch entlastet.

Der beschriebene Einlaufzyklon, in den das Abwasser tangential eingeleitet wird und durch die intensive Vermischung mit der Biomasse zu erhöhter Gasproduktion führt, bildet gleichzeitig die Triebkraft für die Medienströmung innerhalb und außerhalb des Einlaufzyklons im Sumpf und der gesamten Untersäule des Reaktors, ohne dass eine weitere externe Pumpleistung notwendig ist.

Die Intensität der sich einstellende Umlaufströmung kann wie oben erläutert durch die Austrittshöhe einer in der Obersäule des Reaktors angeordneten Steigleitung vorgegeben werden, wozu die Austrittshöhe der Steigleitung variierbar ist. Hierzu ist in einer besonders bevorzugten Ausführungsform eine höhenverstellbare Auslaufmuffe, die die Steigleitung im Bereich des oberen Endes umgibt, angeordnet. Es hat sich gezeigt, dass die Höhe des oberen Austritts der Steigleitung große Auswirkungen auf die sich im Reaktor ausbildende Umlaufströmung hat, d.h. dass über die Höhe des oberen Endes der Steigleitung im Reaktorkopf die Intensität der Umlaufströmung einstellbar ist.

Befindet sich die Austrittshöhe der Steigleitung weit oberhalb des Flüssigkeitsspiegels im Reaktorkopf, so stellt sich nur ein geringer Umlauf ein. Ist jedoch die Austrittshöhe der Steigleitung nah oberhalb, d.h. nur wenige Zentimeter oberhalb des Flüssigkeitsspiegels im Reaktor, so stellt sich eine erhebliche Umlaufströmung im Reaktor ein.

In den Figuren sind zwei Ausführungsbeispiele eines erfindungsgemäßen Reaktors dargestellt, die nachfolgend erläutert werden. Anhand der Figuren kann ebenfalls das erfindungsgemäße Verfahren erläutert werden. Es zeigen:
- Figur 1: einen Querschnitt durch eine erste Ausführungsform eines erfindungsgemäßen Reaktors zur anaeroben Behandlung von Abwasser;
- Figur 2 a): einen Querschnitt durch eine zweite Ausführungsform eines Reaktors;

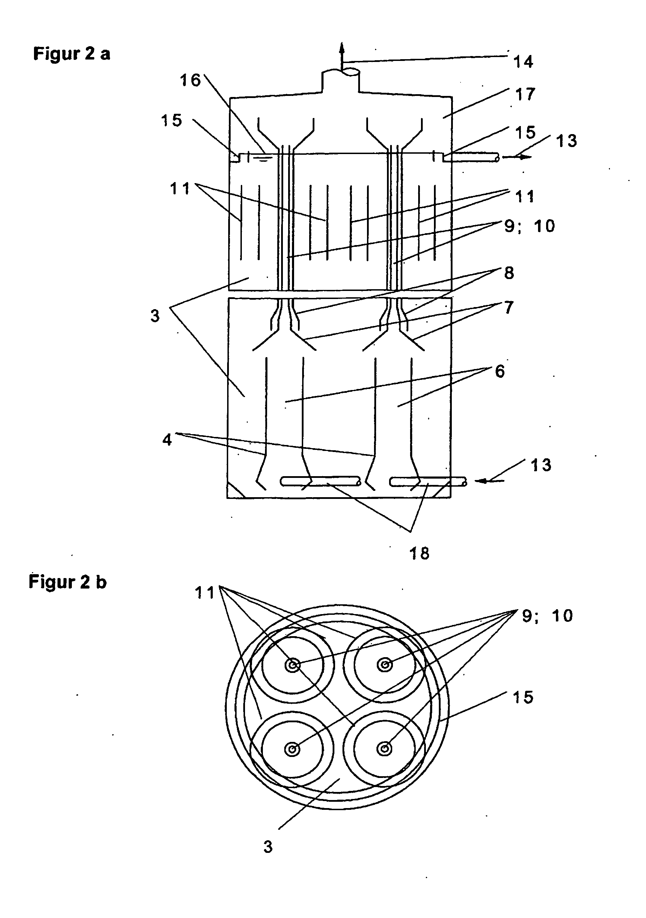

- Figur 2 b): einen horizontalen Schnitt durch den Reaktor nach Figur 2 a);

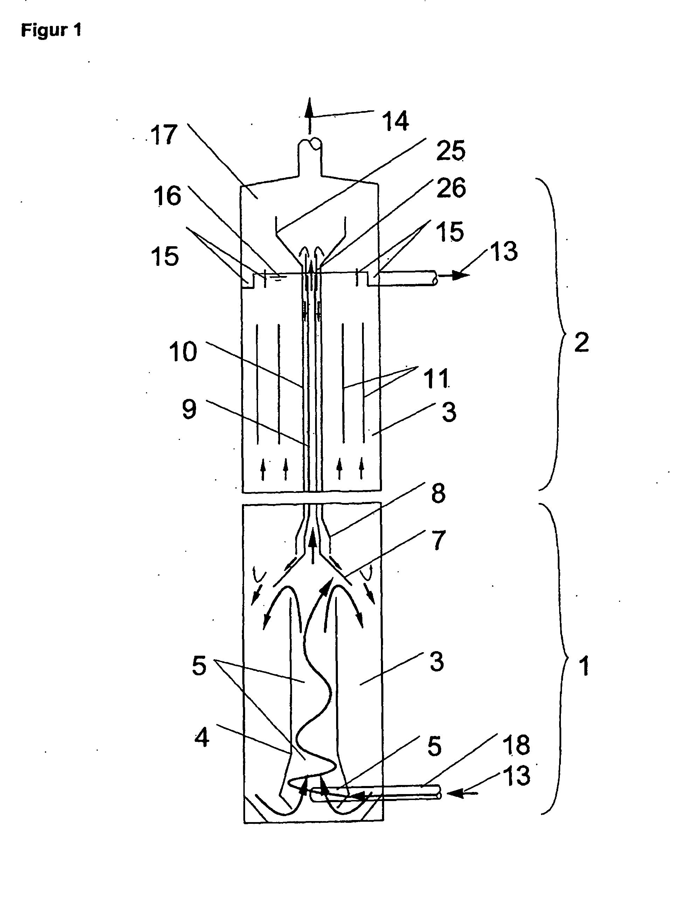

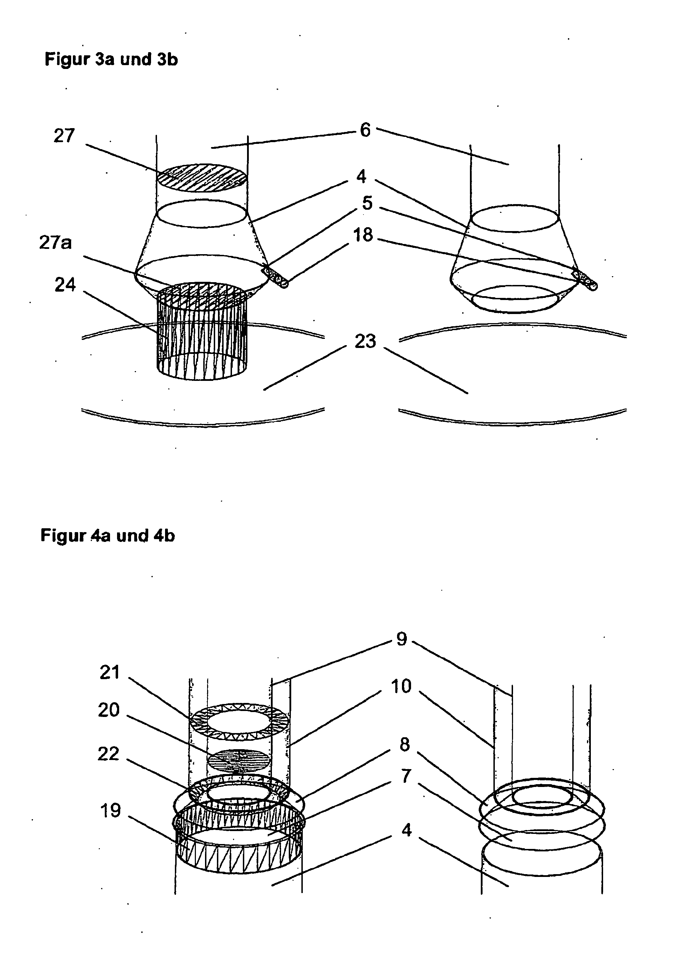

- Figur 3: eine perspektivische Ansicht des Einlaufbereiches eines Einlaufzyklons des Reaktors nach Figur 1;
- Figur 4: eine perspektivische Ansicht eines Ausschnittes des Zwischenabscheiders sowie der Steigleitung und Fallleitung des Reaktors nach Figur 1;

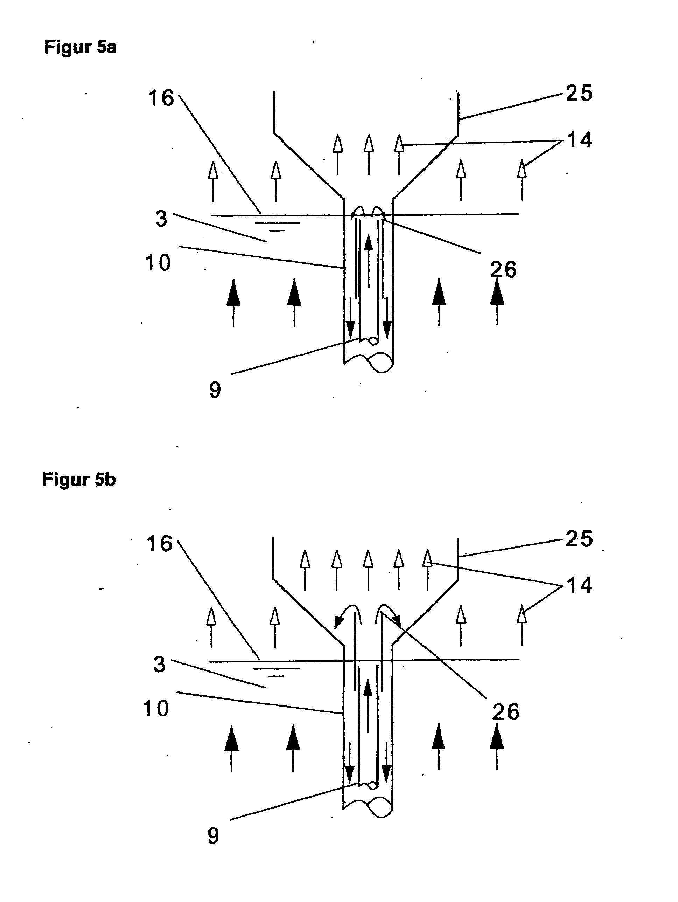

- Figur 5 a): einen vergrößerten Querschnitt durch die Einbauten in der Obersäule des Reaktors nach Figur 1 mit variabler Steigleitung bei niedriger Austrittshöhe;
- Figur 5 b): einen vergrößerten Querschnitt durch die Einbauten in der Obersäule des Reaktors nach Figur 1 mit variabler Steigleitung bei erhöhter Austrittshöhe;

Figur 1 zeigt einen senkrechten Schnitt durch eine erste Ausführungsform eines erfindungsgemäßen Reaktors. Der Reaktor ist funktionell gebildet durch die beiden Bereiche der Untersäule 1 und der Obersäule 2.

Im Bereich der Untersäule 1 befindet sich ein Schlammbett mit Biomasse zur Umsetzung organischer Bestandteile, bzw. organischer Verunreinigungen von Abwasser 13 welches über die Zuleitung 18 in den unteren Bereich 1 des Reaktors eingebracht wird.

Das Abwasser wird über die Leitung 18 in die Zulaufzone 5 des Einlaufzyklons 4 in der Untersäule 1 des Reaktors eingebracht. Durch die tangentiale Einströmung des Abwassers und durch das sich bildende Gas in dem Schlammbett, bildet sich nach der Durchmischung von Abwasser und Schlammpellets in der Mischzone 6 in dem Einlaufzyklon 4 eine durch den Pfeil angedeutete aufsteigende Wirbelströmung aus. Durch diese in dem Einlauftzyklon 4 aufsteigende Wirbelströmung entsteht gleichzeitig ein Sog an der Unterseite des Einlaufzyklons 4 wodurch Material aus dem Reaktorraum 3 angesaugt wird, so dass sich die durch die Pfeile angedeutete Rezirkulationsströmung im Inneren des Einlaufzyklons 4 nach oben gerichtet und außerhalb des Einlaufzyklons 4 im Reaktorraum 3 nach unten gerichtet ausbildet, wie dies durch die Pfeile angedeutet ist.

Durch die Ausbildung der in dem Einlaufzyklon 4 aufsteigenden Wirbelströmung und der Durchmischung von Wasser und Schlammpellets in der Mischzone 6 erfolgt eine optimale Durchmischung und somit eine optimale anaerobe Umsetzung und Biogasbildung.

Durch die Verwirbelungen und den sofortigen Kontakt mit den im Reaktor befindlichen Schlammpellets wird Biogas entwickelt, was aufgrund des Mammutpumpeneffektes zu einer Verstärkung der Aufwärtsströmung des Dreiphasengemisches führt.

Der Einlaufzyklon 4 weist an seiner Unterseite eine trichterförmigen zulaufzone 5 auf, die wiederum an der Unterseite einen sich verjüngenden Abschnitt aufweist.

In den Figuren 3 a) und 3 b) ist diese zulaufzone des Einlaufzyklons 4 vergrößert dargestellt. Der Einlaufzyklon 4 befindet sich in einem Abstand oberhalb des Reaktorbodens 23, so dass sich der mit dem Bezugszeichen 24 gekennzeichnete freie Strömungsquerschnitt zwischen dem Reaktorboden 23 und der Zulaufzone 5 des Einlaufzyklons 4 ausbildet. Weiter oben weist der Einlaufzyklon 4 die Mischzone 6 auf, in der sich aufgrund der Wirbelströmung die sich durch die tangentiale Anströmung durch das Zulaufrohr 18 in die Zulaufzone 5 des Einlaufzyklons 4 und die anschließende Durchmischung und Gasbildung einstellt.

In dem senkrechten Schnitt nach Figur 1 des Reaktors ist dargestellt der oberhalb des Einlaufzyklons 4 angeordnete Zwischenabscheider 7, der an seiner Unterseite einen nach unten geöffneten Trichter aufweist und der in einer solchen Höhe über dem Einlaufzyklon 4 angeordnet ist, dass hier ein definierter Teilstrom des aufsteigenden Dreiphasengemisches abgeschieden und separat in der Steigleitung 9 zum Reaktorkopf geführt wird. Das Steigrohr 9 endet oberhalb des Wasserspiegels 16 im Bereich des Reaktorkopfes. Ebenfalls im Bereich des Reaktorkopfes angeordnet ist das Ablaufsystem 15 zur Ableitung gereinigten Wassers. Die Steigleitung 9 endet somit im Bereich des Gasraumes 17, d.h. die Höhe der Austrittsöffnung der Steigleitung 9 ist oberhalb des Flüssigkeitsstandes 16 in Reaktorkopf. Im Reaktorkopf trennt sich das Biogas ungehindert und wird abgeleitet über die Gasleitung 14 aus dem Gassammelraum 17.

Das Flüssigkeits-Schlammgemisch wird in einen die Steigleitung 9 umschließenden Trichter 25 gesammelt und über eine sich an den Trichter 25 anschließende Fallleitung 10 im freien Ablauf direkt in die Untersäule 1 des Reaktors zurückgeleitet. Die Fallleitung 10 ist dabei derart ausgestaltet, dass diese die Steigleitung 9 koaxial umschließt. Wie durch die Pfeile aus dem Ablauf 8 der Fallleitung 10 heraus über den Trichter 7 der Steigleitung bzw. des Zwischenabscheiders 7 hinweg angedeutet, wird das vom Reaktorkopfbereich zurückgeführte Flüssigkeits-Feststoff-Gemisch in den Reaktorraum 3 eingespeist, so dass hier ein Rückfluss der Schlammpellets erfolgt, zu dem im unteren Bereich 1 des Reaktors ausgebildeten Umlauf hinzukommend. Das aus der Fallleitung 10 austretende Zweiphasengemisch wird somit in die im Reaktorraum 3 ausgebildete Abwärtsströmung abgegeben und so auf kurzem und schnellen Wege wiederum der Unterseite in den Einlaufzyklon 4 eingesaugt. Mit dem zulaufendem Rohwasser vermischt, wird sofort wieder Biogas in dem Einlaufzyklon 4 erzeugt, welches wiederum den entsprechenden Auftrieb herbeiführt.

Wie zuvor beschrieben bildet sich somit ein stetiger Naturumlauf innerhalb der Reaktorbereiche 1, 2 aus, ohne das es der Zufuhr einer weiteren externen Pumpleistung bedarf.

Jener Teil des aufsteigenden Dreiphasengemisches, der nicht über den Zwischenabscheider 7 und die Steigleitung 9 unmittelbar zum Reaktorkopf zugeführt wird, steigt an der Außenseite der Fallleitung 10, wie durch die Pfeile dargestellt, auf und wird durch den Laminator 11 gleichgerichtet und beruhigt. Der Laminator 11 ist gebildet durch eine Mehrzahl koaxial angeordneter Rohrabschnitte. Die derart gleichgerichtet und beruhigte Strömung bildet somit eine laminare Aufwärtsströmung hin zum Wasserspiegel 16 im Bereich des Reaktorkopfes aus, wo es zu einer Ausgasung des Dreiphasengemisches in den Gasraum 17 kommt. Über ein Ablaufsystem 15 ist gereinigtes Wasser entnehmbar. Aus dem Gasraum 17 wird Biogas über die Ableitung 14 entnommen.

Im Reaktorkopf erfolgt somit die endgültige Abtrennung des Klarwassers von den Schlammpellets einerseits, sowie die Ausgasung andererseits. Durch die Ausprägung der Strömungsverhältnisse sind die in dem Reaktorraum 3 befindlichen Schlammpellets optimal ausgenutzt zur Umsetzung organischer Bestandteile in Biogas. Es ist bei dem erfindungsgemäßen Reaktor gemäß Figur 1 nicht erforderlich, eine externe Pumpleitung zur Aufrechterhaltung der dargestellten Strömungsverhältnisse bzw. des Naturumlaufes innerhalb des Reaktors aufzubringen.

In Figur 2 dargestellt ist ein senkrechter Schnitt durch eine zweite Ausführungsform eines erfindungsgemäßen Reaktors (Figur 2 a), bzw. ein horizontaler Schnitt durch diese zweite Ausführungsform (Figur 2 b). Gleiche Bezugszeichen bezeichnen dabei gleiche Bauteile bzw. Baugruppen wie bei der Darstellung gemäß Figur 1.

Der Reaktor nach Figur 2 unterscheidet sich von der ersten Ausführungsform dadurch, dass nunmehr vier zylindrische Einlaufbereiche bzw. Einlaufzyklone strömungstechnisch parallel geschaltet sind, wodurch sich eine besonders vorteilhafte und raumsparende Anordnung ergibt. Oberhalb eines jedes einzelnen Zyklons ist wiederum angeordnet ein Zwischenabscheider, sowie ein Laminatorsystem entsprechend dem grundsätzlichen Aufbau nach Figur 1.

Es ist somit möglich, eine Mehrzahl von Einbauten jeweils umfassend einen Einlaufzyklon, einen Zwischenabscheider mit Steigleitung und Rücklauftrichter und Fallleitung sowie ein Laminatorsystem strömungstechnisch parallel geschaltet anzuordnen, um zu einer optimierten Raumausnutzung zu gelangen. Die Darstellungen nach den Figuren 1 bzw. 2 sind dabei lediglich beispielhaft. Die in den vertikalen in etwa mittig angeordneten Unterbrechungen zwischen dem unteren Bereich 1 und dem oberen Bereich 2 des Reaktors, symbolisieren lediglich zeichnungstechnisch eine zeichnerische Verkürzung der axialen Baulange der Reaktoren. Alternativ zu den Darstellungen nach den Figuren 1 und zwei ist jede andere beliebige Anzahl parallel geschalteter Einbauten möglich.

In Figur 3 dargestellt sind die freien Strömungsquerschnitte im Bereich der zulaufzone 5 des Einlaufzyklons 4 mit dem freien Strömungsquerschnitt 24 zwischen Reaktorboden 23 und dem Einlaufbereich bzw. der Zulaufzone 5 des Zyklons 4 mit sich daran in senkrechter Richtung nach oben anschließender Mischzone 6. Dargestellt sind ebenfalls der freie Strömungsquerschnitt 27 in der Mischzone sowie der freie Strömungsquerschnitt 27a im Bereich der Unterkante des Einlaufzyklons 4. Das zu reinigende Abwasser wird der Zulaufzone 5 tangential über die Rohrleitung 18 zugeführt.

In Figur 4 sind dargestellt die Strömungsquerschnitte im Bereich des Zwischenabscheiders 7, sowie des Zwischenverteilers 8 der Steigleitung 9 und der Fallleitung 10. Sichtbar ist der freie Strömungsquerschnitt 19 zwischen Einlaufzyklon 4 und dem Zwischenabscheider 7 sowie weiter oben der freie Strömungsquerschnitt 20 in der Steigleitung 9, der freie Strömungsquerschnitt 21 in der Fallleitung 10 sowie der freie Strömungsquerschnitt 22 zwischen Zwischenabscheider 7 und Zwischenverteiler 8. Steigleitung 9 und Fallleitung 10 sind dabei derart dimensioniert, dass der freie Strömungsquerschnitt 20 der Steigleitung 9 und der freie Strömungsquerschnitt 21 der Failleitung 10 eine Identische Querschnittsfläche aufweisen.

In den Figuren 5a und 5b ist dargestellt ein Querschnitt durch die Einbauten In der Obersäule des Reaktors nach Figur 1 mit variabler Austrittshöhe der Steigleitung 9 mit einer niedrigen Austrittshöhe gemäß der Darstellung nach Fig. 5a sowie mit einer erhöhten Austrittshöhe gem. Fig. 5b.

Die Steigleitung 9 weist an ihrem oberen Ende eine höhenverstellbare Auslaufmuffe 26 auf, die die Steigleitung 9 koaxial umgibt. Steigleitung 9 und Auslaufmuffe 26 sind koaxial innerhalb der Fallleitung 10, die der Rückführung des entgasten Zwelphasengemisches dient, angeordnet. Das höhenverstellbare obere Ende der Steigleitung 9 ist umgeben vom Rücklauftrichter 25 im Reaktorkopf.

Bei der Einstellung der Muffe 26 gemäß Figur 5a, d.h. bei einer Austrittshöhe der Steigleitung nah oberhalb des Flüssigkeitsspiegels 16 im Reaktor, d.h. nur wenige Zentimeter oberhalb des Wasserspiegels 16, so stellt sich eine erhebliche Umlaufströmung im Reaktor mit einem großen Massenstrom ein.

Befindet sich die Austrittshöhe der Steigleitung 9 jedoch weiter oberhalb des Flüssigkeitsspiegels 16 im Reaktorkopf, wie dies in Figur 5b dargestellt ist, so stellt sich nur ein geringer Umlauf innerhalb des Reaktors ein.

### Bezugszeichenliste:

- 1.: Untersäule des Reaktors
- 2.: Obersäule des Reaktors
- 3.: Reaktorraum
- 4.: Einlaufzyklon
- 5.: Zulaufzone
- 6.: Mischzone
- 7.: Zwischenabscheider
- 8.: Zwischenverteiler
- 9.: Steigleitung
- 10.: Fallleitung
- 11.: Laminator
- 12.: Schlammpellets
- 13.: Abwasser
- 14.: Biogas
- 15.: Ablaufsystem
- 16.: Wasserspiegel
- 17.: Gasraum
- 18.: Zulaufrohr
- 19.: freier Strömungsquerschnitt zwischen Einlaufzyklon und Zwischenabscheider
- 20.: freier Strömungsquerschnitt in Steigleitung
- 21.: freier Strömungsquerschnitt in Fallleitung
- 22.: freier Strömungsquerschnitt zwischen Zwischenabscheider und Zwischenverteiler
- 23.: Reaktorboden
- 24.: freier Strömungsquerschnitt zwischen Reaktorboden und Zwischenverteiler
- 25.: Rücklauftrichter
- 26.: Auslaufmuffe
- 27.: freier Strömungsquerschnitt in der Mischzone
- 27a.: freier Strömungsquerschnitt Einlaufzyklon-Unterkante

## Patentansprüche

1. Reaktor zur anaeroben Behandlung von Abwasser durch anaerobe biologische Umsetzung organischer Bestandteile und/oder Verunreinigungen mittels granulierter und/oder flockiger und/oder auf fluidisierbaren Trägermaterialien fixierter Biomasse,
wobei der Reaktor in einem unteren Bereich (1) eine Abwasserzuleitung (18) aufweist und wobei der Reaktor im unteren Bereich (1) zumindest einen Einlaufzyklon (4) aufweist, in den das Abwasser tangential einleitbar ist,
wobei oberhalb des Einlaufzyklons (4) ein Zwischenabscheider (7) angeordnet ist, der in eine Steigleitung (9) zur Leitung eines Dreiphasengemisches in einen Kopfbereich des Reaktors mündet, und
wobei eine Fallleitung (10) zur Rückführung eines Flüssig-Feststoffgemisches von dem Kopfbereich des Reaktors zu einem mittleren Bereich oder dem unteren Bereich (1) des Reaktors die Steigleitung (9) koaxial umgibt.

2. Reaktor nach Anspruch 1, **dadurch gekennzeichnet,**
**dass** der Einlaufzyklon (14) in dem Reaktorraum (3) senkrecht angeordnet ist, so dass sich innerhalb des Einlaufzyklons (4) eine nach oben gerichtete Wirbelströmung ausbildet.

3. Reaktor nach einem der vorherigen Ansprüche, **dadurch gekennzeichnet,**
**dass** die Austrittshöhe der Steigleitung (9) im Kopfbereich des Reaktors variabel ist, insbesondere mittels einer höhenverstellbaren Auslaufmuffe (26) einstellbar ist und/oder
**dass** der Einlaufzyklon (4) und die Steigleitung (9) miteinander verbunden sind und/oder
**dass** die Steigleitung (9) einen nach unten geöffneten Einlauftrichter aufweist, insbesondere wobei der Durchmesser des nach unten geöffneten Einlauftrichters größer ist als der Durchmesser des darunter angeordneten Einlaufzyklons (4).

4. Reaktor nach einem der vorherigen Ansprüche, **dadurch gekennzeichnet,**
**dass** im Kopfbereich des Reaktors ein Gassammelraum angeordnet ist, aus dem über eine Anschlussleitung (14) Biogas entnehmbar ist und/oder
**dass** im oberen Bereich (2) des Reaktors ein Ablaufsystem (15) angeordnet ist, mittels dessen behandeltes Wasser aus dem Reaktor ableitbar ist, und/oder
**dass** im oberen Bereich (2) des Reaktors ein Rücklauftrichter (25) angeordnet ist, der nach oben in einen Gassammelraum im Kopfbereich des Reaktors mündet und der nach unten in die Fallleitung (10) mündet, insbesondere dass die Fallleitung vom Kopfbereich des Reaktors bis zu dem mittleren oder dem unteren Bereich (1) des Reaktors verlaufend angeordnet ist.

5. Reaktor nach einem der vorherigen Ansprüche, **dadurch gekennzeichnet,**
**dass** die Fallleitung (10) zur Rückführung des Flüssig-Feststoffgemisches zu dem unteren Bereich (1) des Reaktors und die Steigleitung (9) zur Leitung des Dreiphasengemisches in den Kopfbereich des Reaktors angeordnet sind, wobei der freie Strömungsquerschnitt der Fallleitung (10) mindestens dem freien Strömungsquerschnitt der Steigleitung (9) entspricht.

6. Reaktor nach einem der vorherigen Ansprüche, **dadurch gekennzeichnet,**
**dass** der Reaktor zumindest einen Laminator (11) zur Gleichrichtung und/oder Beruhigung der Strömung aufweist und/oder
**dass** zumindest ein Laminator (11) zur Gleichrichtung und/oder Beruhigung der Strömung im oberen Bereich (2) des Reaktors angeordnet ist und/oder
**dass** der Reaktor zumindest einen durch koaxial angeordnete Rohrabschnitte gebildeten Laminator (11) zur Gleichrichtung und/oder Beruhigung der Strömung aufweist.

7. Reaktor nach einem der vorherigen Ansprüche, **dadurch gekennzeichnet,**
**dass** der Außendurchmesser des Einlaufzyklons (4) kleiner ist als der Innendurchmesser des Reaktorraumes (3), so dass sich eine Umlaufströmung um den Einlaufzyklon (4) ausbilden kann und/oder
**dass** der Einlaufzyklon (4) in einem Abstand von Reaktorboden angeordnet ist, insbesondere in einem Abstand, der größer ist als der Durchmesser des Einlaufzyklons (4) und/oder
**dass** der Einlaufzyklon (4) einen sich nach unten erweiternden trichterförmigen Einlaufbereich aufweist, insbesondere, dass sich der Einlaufbereich bis auf einen um den Faktor bis zu 1,6 gegenüber dem Durchmesser des Einlaufzyklons (4) vergrößerten Durchmesser erweitert.

8. Reaktor nach einem der vorherigen Ansprüche, **dadurch gekennzeichnet,**
**dass** der Einlaufzyklon (4) oberhalb des Einlaufbereiches eine Mischzone (6) aufweist und/oder
**dass** der Reaktor mehrere parallel angeordnete Einlaufzyklone (4) aufweist und/oder
**dass** die Querschnittsfläche des/der Einlaufzyklons/Einlaufzyklone (4) 30 % bis 50 %, insbesondere 40 % der Querschnittsfläche des Reaktors entspricht und/oder
**dass** der Reaktor (1, 2, 3) und/oder der/die Einlaufzyklon/e (4) und/oder ein Laminator (11) und/oder eine Ausgasvorrichtung und/oder Steigleitung/en (9) und/oder Fallleitung/en (10) und/oder Einlauftrichter (7) einen rotationssymmetrischen Aufbau aufweisen, insbesondere dass Einbauten (7, 9, 10, 11) innerhalb des Reaktors koaxial zueinander angeordnet sind.

9. Verfahren zur anaeroben Behandlung von Abwasser durch anaerobe biologische Umsetzung organischer Bestandteile und/oder Verunreinigungen mittels granulierter und/oder flockiger und/oder auf fluidisierbaren Trägermaterialien fixierter Biomasse in einem Reaktor, der zumindest in einem unteren Bereich einen Biomassesumpf aufweist, wobei dem Reaktor im unteren Bereich das Abwasser zugeführt wird, wobei das Abwasser in einen Einlaufzyklon in dem Reaktor tangential eingeleitet wird, so dass sich in dem Einlaufzyklon durch die Biogasbildung eine nach oben gerichtete Wirbelströmung eines Dreiphasengemisches aus Gas, Wasser und Biomasse ausbildet, wobei oberhalb des Einlaufzyklons ein Teil des aufsteigenden Dreiphasengemisches über einen Zwischenabscheider und eine daran angeschlossene Steigleitung zur Entgasung in einen Kopfbereich des Reaktors geleitet wird und wobei vom Kopfbereich des Reaktors entgastes Zweiphasengemisch aus Wasser und Biomasse über eine die Steigleitung koaxial umgebende Fallleitung zu einem mittleren oder dem unteren Bereich des Reaktors geleitet wird.

10. Verfahren nach Anspruch 9, **dadurch gekennzeichnet, dass** eine Umlaufströmung um den Einlaufzyklon durch eine innerhalb des Einlaufzyklons aufsteigende Wirbelströmung und eine außerhalb des Einlaufzyklons absinkende Rückströmung ausgebildet wird.

11. Verfahren nach Anspruch 9 oder 10, **dadurch gekennzeichnet, dass** das Abwasser mit der Biomasse in einer Mischzone des Einlaufzyklons durchmischt wird.

12. Verfahren nach einem der Ansprüche 9 bis 11, **dadurch gekennzeichnet, dass** die aufsteigende Strömung mittels eines Laminators beruhigt wird, insbesondere dass eine derartige Beruhigung der Strömung oberhalb des Einlaufzyklons erfolgt.

13. Verfahren nach einem der Ansprüche 9 bis 12, **dadurch gekennzeichnet, dass** in einer Mischzone des Einlaufzyklons eine Durchmischung der drei Phasen aus dem im Reaktor befindlichen sowie zugeleitetem Abwasser, der Biomasse sowie des permanent gebildeten Biogases erfolgt, wobei durch den Dichteunterschied des Dreiphasengemisches in der Mischzone zu dem Gemisch in dem umgebenden Reaktorraum eine Verstärkung der Aufwärtsströmung im Bereich der Mischzone bewirkt wird.

14. Verfahren nach einem der Ansprüche 9 bis 13, **dadurch gekennzeichnet, dass** durch die aufsteigende Wirbelströmung innerhalb des Einlaufzyklons mit einem strömungstechnisch nachfolgend angeordneten Zwischenabscheider und der Überleitung in eine Steigleitung bis zum Reaktorkopf zur Entgasung des Dreiphasengemisches und der Rückleitung des entgasten Zweiphasengemisches in den mittleren/unteren Bereich des Reaktors sowie die außerhalb des Einlaufzyklons absinkende Strömung im Bereich des Biomassesumpfes sich eine durch die Biogasbildung und den damit verbundenen Auftrieb der Gasphase ein Naturumlauf in dem Reaktor ausbildet, durch den insbesondere die Durchmischung und die anaerobe Reinigung des Abwassers und die Biogasbildung aufrechterhalten und/oder verstärkt wird und/oder
dass im Bereich des Reaktorkopfes gereinigtes Wasser und/oder Biogas entnommen wird.

## Claims

1. A reactor for the anaerobic treatment of waste water by anaerobic biological conversion of organic components and/or impurities by means of biomass which is granulated and/or flaky and/or fixed on fluidizable carrier materials,
wherein the reactor has a waste water feed line (18) in a lower area (1) and wherein the reactor has at least one intake-cyclone (4) in the lower area (1), in which the waste water can be tangentially introduced,
wherein an intermediate separator (7) is arranged above the intake cyclone (4), which leads into a rising pipe (9) for conducting a three-phase mixture in a head area of the reactor, and
wherein a down pipe (10) for the return of a fluid-solid mixture from the head area of the reactor to a center area or the lower area (1) of the reactor coaxially surrounds the rising pipe (9).

2. A reactor according to claim 1, **characterized in**
**that** the intake cyclone (14) is arranged vertically in the reactor chamber (3), so that an eddy flow directed upwards develops within the intake cyclone (4).

3. A reactor according to one of the preceding claims, **characterized in**
**that** the outlet height of the rising pipe (9) is variable in the head area of the reactor, in particular is adjustable by means of a height-adjustable discharge sleeve (26) and/or
**that** the intake cyclone (4) and the rising pipe (9) are connected to each other and/or
**that** the rising pipe (9) has an intake funnel opened upwards, in particular wherein the diameter of the intake funnel opened downwards is greater than the diameter of the intake cyclone (4) arranged there under.

4. A reactor according to one of the preceding claims, **characterized in**
**that** a gas collection chamber is arranged in the head area of the reactor, from which biogas can be extracted via a connection line (14) and/or
**that** a drainage system (15) is arranged in the upper area (2) of the reactor, by means of which treated water can be drained from the reactor, and/or
**that** a return flow funnel (25) is arranged in the upper area (2) of the reactor, which leads upwards into a gas collection chamber in the head area of the reactor and which leads downwards into the down pipe (10), in particular that the down pipe is arranged passing from the head area of the reactor to the center or the lower area (1) of the reactor.

5. A reactor according to one of the preceding claims, **characterized in**
**that** the down pipe (10) is arranged for the return of the fluid-solid mixture to the lower area (1) of the reactor and the rising pipe (9) is arranged for conducting the three-phase mixture into the head area of the reactor, wherein the free flow cross-section of the down pipe (10) corresponds at least to the free flow cross-section of the rising pipe (9).

6. A reactor according to one of the preceding claims, **characterized in**
**that** the reactor has at least one laminator (11) for rectifying and/or slowing down the flow and/or
**that** at least one laminator (11) is arranged for rectifying and/or slowing down the flow in the upper area (2) of the reactor and/or
**that** the reactor has at least one laminator (11) formed by coaxially arranged pipe sections for rectifying and/or slowing down the flow.

7. A reactor according to one of the preceding claims, **characterized in**
**that** the outside diameter of the intake cyclone (4) is smaller than the inside diameter of the reactor chamber (3), so that a circulation flow can develop around the intake cyclone (4) and/or
**that** the intake cyclone (4) is arranged at a distance from the reactor floor, in particular at a distance, which is greater than the diameter of the intake cyclone (4) and/or
**that** the intake cyclone (4) has a funnel-shaped intake area extending downwards, in particular, that the intake area extends to a diameter increased by a factor of up to 1.6 compared to the diameter of the intake cyclone (4).

8. A reactor according to one of the preceding claims, **characterized in**
**that** the intake cyclone (4) has a mixing zone (6) above the intake area and/or
**that** the reactor has several intake cyclones (4) arranged in parallel and/or
**that** the cross-section area of the intake cyclone/intake cyclones (4) corresponds to 30 % to 50 %, in particular 40 % of the cross section area of the reactor and/or
**that** the reactor (1, 2, 3) and/or the intake cyclone(s) (4) and/or a laminator (11) and/or an outgas device and/or rising pipe(s) (9) and/or down pipe(s) (10) and/or intake funnel (7) have a rotationally symmetrical design, in particular that installations (7, 9, 10, 11) within the reactor are arranged coaxially to each other.

9. A method for the anaerobic treatment of waste water by anaerobic biological conversion of organic components and/or impurities by means of biomass which is granulated and/or flaky and/or fixed on fluidizable carrier materials in a reactor, which at least in the lower area has a biomass sump, wherein the waste water is fed to the reactor in the lower area, wherein the waste water is tangentially introduced into an intake cyclone in the reactor, so that an eddy flow directed upwards of a three-phase mixture of gas, water and biomass develop in the intake cyclone through the biogas formation, wherein above the intake cyclone a part of the rising three-phase mixture is conducted via an intermediate separator and a rising pipe connected to it for degassing into a head area of the reactor and wherein from the head area of the reactor a degassed two-phase mixture of water and biomass is conducted via a down pipe coaxially surrounding the rising pipe to a center or the lower area of the reactor.

10. A method according to claim 9, **characterized in that** a circulation flow about the intake cyclone is developed by an eddy flow rising within the intake cyclone and a return flow falling outside of the intake cyclone.

11. A method according to claim 9 or 10, **characterized in that** the waste water is intermixed with the biomass in a mixing zone of the intake cyclone.

12. A method according to one of the claims 9 to 11, **characterized in that** the rising flow is slowed down by means of a laminator, in particular that such a slowing down of the flow occurs above the intake cyclone.

13. A method according to one of the claims 9 to 12, **characterized in that** in a mixing zone of the intake cyclone a through-mixing takes place of the three phases of the waste water located as well as supplied in the reactor, the biomass as well as the permanently formed biogas, wherein a strengthening is brought about of the up-flow in the area of the mixing zone through the density difference between the three-phase mixture in the mixing zone and the mixture in the surrounding reactor chamber.

14. A method according to one of the claims 9 to 13, **characterized in**
**that** through the rising eddy flow within the intake cyclone having an intermediate separator arranged fluidically downstream and the transfer to a rising pipe up to the reactor head for degassing the three-phase mixture and the return of the degassed two-phase mixture into the center/lower area of the reactor as well as the flow falling outside of the intake cyclone in the area of the biomass sump, a natural circulation develops in the reactor through the biogas formation and the boost of the gas phase connected with it, through which in particular the through-mixing and the anaerobic purifying of the waste water and the biogas formation is maintained and/or strengthened and/or that in the area of the reactor head purified water and/or biogas is extracted.

## Revendications

1. Réacteur pour le traitement anaérobie d'eaux usées par réaction biologique anaérobie de constituants et/ou d'impuretés organiques, à l'aide d'une biomasse granulée et/ou floculeuse et/ou fixée sur des matériaux supports fluidisables,
le réacteur présentant dans une zone inférieure (1) une conduite d'amenée des eaux usées (18), le réacteur présentant, dans la zone inférieure (1), au moins un cyclone d'entrée (4), dans lequel les eaux usées peuvent être déchargées d'une manière tangentielle,
un séparateur intermédiaire (7), qui débouche dans une conduite montante (9) pour diriger un mélange triphasique dans une zone de tête du réacteur, étant disposé au-dessus du cyclone d'entrée (4), et
une conduite descendante (10), destinée au renvoi d'un mélange liquide-solide, de la zone de tête du réacteur à une zone centrale ou à la zone inférieure (1) du réacteur, entourant d'une manière coaxiale la conduite montante (9).

2. Réacteur selon la revendication 1, **caractérisé**
**en ce que** le cyclone d'entrée (14) est disposé verticalement dans le compartiment réacteur (3), de façon qu'il se forme à l'intérieur du cyclone d'entrée (4) un écoulement tourbillonnaire dirigé vers le haut.

3. Réacteur selon l'une des revendications précédentes, **caractérisé**
**en ce que** la hauteur de sortie de la conduite montante (9) est variable dans la zone de tête du réacteur, et est réglable en particulier au moyen d'un manchon de sortie (26) réglable en hauteur, et/ou
**en ce que** le cyclone d'entrée (4) et la conduite montante (9) sont assemblés l'un à l'autre, et/ou
**en ce que** la conduite montante (9) présente un entonnoir d'entrée, ouvert vers le bas, en particulier le diamètre de l'entonnoir d'entrée ouvert vers le bas étant supérieur au diamètre du cyclone d'entrée (4) disposé en-dessous.

4. Réacteur selon l'une des revendications précédentes, **caractérisé**
**en ce qu'**un compartiment collecteur de gaz, dont un biogaz peut être prélevé par une conduite de raccordement (14), est disposé dans la zone de tête du réacteur et/ou
**en ce que**, dans la zone supérieure (2) du réacteur est disposé un système de décharge (15), à l'aide duquel l'eau traitée peut être évacuée du réacteur, et/ou
**en ce que**, dans la zone supérieure (2) du réacteur est disposé un entonnoir de retour (25), qui débouche vers le haut dans un compartiment collecteur de gaz dans la zone de tête du réacteur, et qui débouche vers le bas dans la conduite descendante (10), en particulier en ce que la conduite descendante est disposée de façon à courir de la zone de tête du réacteur à la zone centrale ou à la zone inférieure (1) du réacteur.

5. Réacteur selon l'une des revendications précédentes, **caractérisé**
**en ce que** la conduite descendante (10) est disposée de façon à renvoyer le mélange liquide solide vers la zone inférieure (1) du réacteur, et la conduite montante (9) est disposée pour envoyer le mélange triphasique dans la zone de tête du réacteur, la section libre d'écoulement de la conduite descendante (10) correspondant au moins à la section libre d'écoulement de la conduite montante (9).

6. Réacteur selon l'une des revendications précédentes, **caractérisé**
**en ce que** le réacteur comprend au moins un laminateur (11), pour redresser et/ou apaiser l'écoulement, et/ou
**en ce qu'**au moins un laminateur (11), pour redresser et/ou apaiser l'écoulement, est disposé dans la zone supérieure (2) du réacteur, et/ou
**en ce que** le réacteur comprend au moins un laminateur (11), formé par des tronçons de tuyaux disposés coaxialement, pour redresser et/ou apaiser l'écoulement.

7. Réacteur selon l'une des revendications précédentes, **caractérisé**
**en ce que** le diamètre extérieur du cyclone d'entrée (4) est inférieur au diamètre intérieur du compartiment réacteur (3), de sorte qu'un écoulement périphérique puisse se former autour du cyclone d'entrée (4), et/ou
**en ce que** le cyclone d'entrée (4) est disposé à une certaine distance du fond du réacteur, en particulier à une distance qui est supérieure au diamètre du cyclone d'entrée (4), et/ou
**en ce que** le cyclone d'entrée (4) comprend une zone d'entrée en forme d'entonnoir s'élargissant vers le bas, en particulier en ce que la zone d'entrée s'élargit jusqu'à un diamètre agrandi d'un facteur allant jusqu'à 1,6 par comparaison avec le diamètre du cyclone d'entrée (4).

8. Réacteur selon l'une des revendications précédentes, **caractérisé**
**en ce que** le cyclone d'entrée (4) comprend un secteur de mélange (6) au-dessus de la zone d'entrée et/ou
**en ce que** le réacteur comprend plusieurs cyclones d'entrée (4) disposés parallèlement, et/ou
**en ce que** l'aire en section transversale du/des cyclone(s) d'entrée (4) correspond à 30 à 50 %, en particulier à 40 % de l'aire en section transversale du réacteur, et/ou
**en ce que** le réacteur (1, 2, 3) et/ou le/les cyclone(s) d'entrée (4) et/ou un laminateur (11) et/ou un dispositif d'évacuation des gaz et/ou la/les conduite(s) montante(s) (9) et/ou la/les conduite(s) descendante(s) (10) et/ou l'entonnoir d'entrée (7) présentent une structure à symétrie de rotation, en particulier en ce que les éléments internes (7, 9, 10, 11) sont disposés coaxialement les uns par rapport aux autres à l'intérieur du réacteur.

9. Procédé pour le traitement anaérobie d'eaux usées par réaction biologique anaérobie de constituants et/ou d'impuretés organiques à l'aide d'une biomasse granulée et/ou floculeuse et/ou fixée sur des matériaux supports fluidisables, dans un réacteur qui au moins dans une zone inférieure comprend une pâte de biomasse, les eaux usées étant envoyées au réacteur dans sa zone inférieure, les eaux usées étant introduites tangentiellement dans un cyclone d'entrée dans le réacteur, de telle sorte qu'il se forme dans le cyclone d'entrée, sous l'effet de la formation du biogaz, un écoulement tourbillonnant dirigé vers le haut d'un mélange triphasique de gaz, d'eau et de biomasse, une partie du mélange triphasique montant étant, au-dessus du cyclone d'entrée, envoyée, par un séparateur intermédiaire et une conduite montante qui y est raccordée, pour dégazage dans une zone de tête du réacteur, et le mélange diphasique dégazé de la zone de tête du réacteur, constitué d'eau et de biomasse, étant envoyé, par une conduite descendante entourant coaxialement la conduite montante, vers une zone centrale ou la zone inférieure du réacteur.

10. Procédé selon la revendication 9, **caractérisé en ce qu'**un écoulement périphérique autour du cyclone d'entrée est réalisé par un écoulement tourbillonnant montant à l'intérieur du cyclone d'entrée et par un écoulement en retour, descendant à l'extérieur du cyclone d'entrée.

11. Procédé selon la revendication 9 ou 10, **caractérisé en ce que** les eaux usées sont intimement mélangées à la biomasse dans un secteur de mélange du cyclone d'entrée.

12. Procédé selon l'une des revendications 9 à 11, **caractérisé en ce que** l'écoulement montant est apaisé à l'aide d'un laminateur, en particulier **en ce qu'**un apaisement de ce type de l'écoulement a lieu au-dessus du cyclone d'entrée.

13. Procédé selon l'une des revendications 9 à 12, **caractérisé en ce que**, dans un secteur de mélange du cyclone d'entrée, se produit un mélange intime des trois phases, constitué des eaux usées se trouvant dans le réacteur et qui y sont envoyées, de la biomasse, ainsi que du biogaz formé en permanence, la différence de densité du mélange triphasique dans le secteur de mélange, par comparaison avec le mélange dans le compartiment réacteur qui l'entoure, occasionnant un renforcement de l'écoulement montant dans la zone du secteur de mélange.

14. Procédé selon l'une des revendications 9 à 13, **caractérisé**
**en ce que**, sous l'effet de l'écoulement tourbillonnaire montant à l'intérieur du cyclone d'entrée, avec un séparateur intermédiaire disposé en aval par rapport au sens de l'écoulement, et le transfert dans une conduite montante jusqu'à la tête de réacteur pour dégazage du mélange triphasique et le renvoi du mélange diphasique dégazé dans la zone centrale/inférieure du réacteur, ainsi que de l'écoulement, descendant à l'extérieur du cyclone d'entrée, dans la zone du fond de biomasse, il se forme, sous l'effet de la formation du biogaz ainsi que de la force ascensionnelle qui y est liée de la phase gazeuse, une circulation naturelle dans le réacteur, sous l'effet de laquelle en particulier le mélange intime et la purification anaérobie des eaux usées et la formation du biogaz sont maintenus et/ou renforcés, et/ou
**en ce que** l'eau purifiée et/ou le biogaz sont prélevés dans la zone de la tête du réacteur.
